# EUROPEAN PATENT APPLICATION

(11) **EP 4 712 151 A1**
(43) Date of publication of application: **18.03.2026**
(21) Application number: 25184526.9
(22) Date of filing: 23.06.2025
(51) Int. Cl.: H01M 4/04, H01M 4/139, B05D 1/26

(54) **APPARATUS AND METHOD FOR COATING**

(30) Priority: 13.09.2024 KR 20240126198
(71) Applicant: SAMSUNG SDI CO., LTD., Yongin-si, Gyeonggi-do 17084 (KR)
(72) Inventor: LEE, Junsub, 17084 Yongin-Si, Gyeonggi-do (KR); JUN, Pilgoo, 17084 Yongin-Si, Gyeonggi-do (KR)
(74) Representative: Michalski Hüttermann & Partner Patentanwälte mbB

(57) **Abstract**

Embodiments of the present disclosure provide a coating apparatus. The coating apparatus includes a first material supply unit configured to coat a first mixture layer on a first surface of a substrate, the substrate having markers repeatedly formed along a machine direction, a first sensor configured to sense the first mixture layer and the markers, and a processor configured to determine a position of the first mixture layer based on the markers.

## Description

### BACKGROUND

### TECHNICAL FIELD

The present disclosure relates to a coating apparatus and a coating method. More specifically, the present disclosure relates to a coating apparatus and a coating method for use in a manufacturing process of a secondary battery.

### DESCRIPTION OF THE RELATED ART

While primary batteries are not designed to be (re)charged, secondary (also known as rechargeable) batteries are designed to be discharged and recharged. Among secondary batteries, low-capacity secondary batteries are widely used in portable, small electronic devices, such as smart phones, feature phones, notebook computers, digital cameras, and camcorders, while high-capacity secondary batteries are widely used as power sources for driving motors in hybrid vehicles and electric vehicles, as well as for storing power (e.g., home and/or utility scale power storage). A secondary battery generally includes an electrode assembly including a positive electrode and a negative electrode, a case accommodating both electrodes, and electrode terminals connected to the electrode assembly.

In a process of manufacturing an electrode plate for a secondary battery, a slurry may be coated onto a substrate moving in one direction to form a mixture region on the electrode. The mixture region has a periodic pattern, and various methods are used to reduce errors in pattern formation. However, due to the slipping of the moving substrate and/or measurement inaccuracies, precision in the pattern formation of the mixture region may be reduced.

The information disclosed in this Background section is for enhancement of understanding of the background of the present disclosure. The section may contain information that does not constitute related (or prior) art.

### SUMMARY

Embodiments of the present disclosure provide a coating apparatus and a coating method.

Embodiments of the present disclosure provide coating apparatus including a first material supply unit configured to coat a first mixture layer on a first surface of a substrate including markers repetitively formed along a machine direction, a first sensor configured to sense the first mixture layer and the markers, and a processor configured calculate a position of the first mixture layer based on the markers.

Embodiments of the present disclosure provide coating apparatus including: a first material supply unit configured to coat a first mixture layer on a first surface of a substrate, the substrate comprising markers repeatedly formed along a machine direction; a first sensor configured to sense the first mixture layer and the markers; and a processor configured to determine a position of the first mixture layer based on the markers.

According to an embodiment, the first sensor may sense positions of the markers and distances between the markers and the first mixture layer.

In an embodiment, the first sensor is configured to sense positions of the markers and distances between each of the markers and the first mixture layer.

According to an embodiment, the first mixture layer may include a first edge and a second edge perpendicular to the machine direction, and the processor may measure a first distance between the first edge and a first marker adjacent to the first edge.

In an embodiment, the markers include a first marker, wherein the first mixture layer includes a first edge and a second edge perpendicular to the machine direction, and wherein the processor is configured to determine a first distance between the first edge and the first marker adjacent to the first edge.

According to an embodiment, the processor may measure a second distance between the second edge and a second marker adjacent to the second edge.

In an embodiment, the markers further include a second marker, and wherein the processor is configured to determine a second distance between the second edge and a second marker adjacent to the second edge.

According to an embodiment, the processor may calculate a length of the first mixture layer in the machine direction using the first distance and the second distance.

In an embodiment, the processor is configured to determine a length of the first mixture layer in the machine direction based on the first distance and the second distance.

According to an embodiment, the coating apparatus described above may further include a second material supply unit configured to coat a second mixture layer on a second surface of the substrate. Further, the first surface and the second surface may be surfaces of the substrate opposite to each other, and the processor may control the second material supply unit based on the first distance to adjust a distance between the second mixture layer and the first marker.

In an embodiment, the coating apparatus further includes a second material supply unit configured to coat a second mixture layer on a second surface of the substrate, wherein the second surface is opposite to the first surface, and wherein the processor is configured to control the second material supply unit based on the first distance.

According to an embodiment, the processor may adjust the distance between the second mixture layer and the first marker to be the same as the first distance.

In an embodiment, the processor is configured to adjust a third distance between a third edge of the second mixture layer perpendicular to the machine direction and the first marker to be substantially the same as the first distance.

According to an embodiment, the processor may adjust the distance between the second mixture layer and the first marker to be different from the first distance.

In an embodiment, the processor is configured to adjust a third distance between a third edge of the second mixture layer perpendicular to the machine direction and the first marker to be different from the first distance.

According to an embodiment, the processor may adjust the distance between the second mixture layer and the first marker such that a combined thickness of the first mixture layer and the second mixture layer is equal to or less than a predetermined thickness.

In an embodiment, the processor is configured to adjust a third distance between a third edge of the second mixture layer perpendicular to the machine direction and the first marker such that a combined thickness of the first mixture layer and the second mixture layer is equal to or less than a predetermined thickness.

According to an embodiment, the processor may measure a second distance between the second edge and a second marker adjacent to the second edge, and control, based on the first distance and the second distance, the second material supply unit to adjust a length of the second mixture layer in the machine direction.

In an embodiment, the processor is configured to determine a second distance between the second edge and a second marker adjacent to the second edge, and control the second material supply unit based on the first distance and the second distance.

According to an embodiment, the first material supply unit or the second material supply unit may be spaced apart from the substrate by a predetermined distance, and the processor may control the first material supply unit or the second material supply unit to adjust the predetermined distance.

In an embodiment, the first material supply unit or the second material supply unit is spaced apart from the substrate by a predetermined distance, and wherein the processor is configured to control the first material supply unit or the second material supply unit to adjust the predetermined distance.

According to an embodiment, the coating apparatus described above may further include a second sensor disposed parallel to a transverse direction perpendicular to the machine direction to measure a thickness of the first mixture layer or a thickness of the second mixture layer.

In an embodiment, the coating apparatus further includes second sensor positioned parallel to a transverse direction perpendicular to the machine direction to measure a thickness of the first mixture layer or the second mixture layer.

According to an embodiment, the second sensor may include a first sensing unit and a second sensing unit, and the processor may reduce the predetermined distance in response to a case where a difference between a thickness measured by the first sensing unit and a thickness measured by the second sensing unit is equal to or greater than a predetermined thickness.

In an embodiment, the second sensor includes a first sensing unit and a second sensing unit, and wherein the processor is configured to reduce the predetermined distance in response to a difference determined between a thickness measured by the first sensing unit and a thickness measured by the second sensing unit being equal to or greater than a predetermined thickness.

According to an embodiment, the markers may include a first marker and a second marker, and the coating apparatus may further include a marking unit that forms the first marker and the second marker spaced apart by a predetermined distance.

According to an embodiment, each of the markers may be in a shape of a line parallel to a transverse direction perpendicular to the machine direction.

Embodiments of the present disclosure provide a coating method including coating a first mixture layer by a first material supply unit onto a first surface of a substrate including markers repeatedly formed along a machine direction, the markers having a first marker and a second marker, measuring, by a first sensor, at least one of a first distance between the first marker and the first mixture layer, and a second distance between the second marker and the first mixture layer, adjusting a position at which a second mixture layer is disposed on a second surface of the substrate by controlling a second material supply unit by a processor, using at least one of the first distance or the second distance, and coating the second mixture layer by the second material supply unit onto the second surface of the substrate. Further, the first surface and the second surface are surfaces of the substrate opposite to each other.

Embodiments of the present disclosure provide a coating method including: coating a first mixture layer on a first surface of a substrate, the substrate including markers repeatedly formed along a machine direction, the markers including a first marker and a second marker; determining at least one selected from a first distance and a second distance, the first distance being a distance between a first edge of the first mixture layer and the first marker adjacent to the first edge, the second distance being a distance between a second edge of the first mixture layer and the second marker adjacent to the second edge; adjusting a position of a second mixture layer to be positioned on a second surface of the substrate using at least one selected from the first distance and the second distance, the second surface being opposite to the first surface; and coating the second mixture layer on the second surface of the substrate.

According to an embodiment, the adjusting of the position at which the second mixture layer is disposed may include controlling, by the processor, a distance between the second mixture layer and the first marker to be equal to the first distance.

In an embodiment, the adjusting includes: adjusting a third distance to be substantially equal to the first distance, the third distance being a distance between an edge of the second mixture layer and the first marker.

According to an embodiment, the adjusting of the position at which the second mixture layer is disposed may include controlling, by the processor, a distance between the second mixture layer and the first marker such that a combined thickness of the first mixture layer and the second mixture layer is equal to or less than a predetermined thickness.

In an embodiment, the adjusting includes: adjusting a third distance such that a combined thickness of the first mixture layer and the second mixture layer is equal to or less than a predetermined thickness, the third distance being a distance between an edge of the second mixture layer and the first marker.

According to an embodiment, the adjusting of the position at which the second mixture layer is disposed may include controlling, by the processor, a distance between the second mixture layer and the second marker using the second distance.

In an embodiment, the adjusting includes: adjusting a fourth distance using the second distance, the fourth distance being a distance between an edge of the second mixture layer and the second marker.

According to an embodiment, the coating method described above may further include at least one of calculating, by the processor, a thickness deviation in a transverse direction of the first mixture layer after the coating of the first mixture layer, and adjusting a gap between the first surface and the first material supply unit configured to coat the first mixture layer, or calculating, by the processor, a thickness deviation in a transverse direction of the second mixture layer after the adjusting of the position at which the second mixture layer is disposed, and adjusting a gap between the second surface and the second material supply unit configured to coat the second mixture layer.

In an embodiment, the coating method further includes: determining a thickness deviation in a transverse direction of the first mixture layer after the coating; and adjusting a gap between the first surface and a first material supply unit configured to coat the first mixture layer; or determining a thickness deviation in a transverse direction of the second mixture layer after the adjusting; and adjusting a gap between the second surface and a second material supply unit configured to coat the second mixture layer.

According to some embodiments of the present disclosure, by controlling the coating start points of the mixture layers respectively disposed on the opposite surfaces of the substrate, the number of thickness difference regions in the mixture layers can be reduced, and thus, the degradation of the quality of the electrode plate can be reduced or the quality of the electrode plate can be improved.

According to some embodiments of the present disclosure, by measuring the coating start point of the first mixture layer disposed on the first surface and then adjusting the coating start point of the second mixture layer disposed on the second surface, the degradation of the electrode plate quality can be reduced or the quality of the electrode plate can be improved.

According to some embodiments of the present disclosure, by reducing the thickness deviation in the transverse direction (TD) of at least one of the mixture layers respectively disposed on the opposite surfaces of the substrate, the degradation of the electrode plate quality can be reduced or the quality of the electrode plate can be improved.

According to some embodiments of the present disclosure, by reducing the number of thickness difference regions in the electrode plate or maintaining the thickness of the electrode plate below a predetermined thickness, an electrode plate with a high yield can be provided.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a schematic view of an electrode plate manufacturing apparatus that includes a coating apparatus according to embodiments of the present disclosure.
FIG. 2 is a schematic view of a coating apparatus according to embodiments of the present disclosure.
FIG. 3 is a schematic view of a coating apparatus according to embodiments of the present disclosure, in which a first sensor measures a positional relationship between a first mixture layer on a first surface and first and second markers.
FIG. 4A is a cross-sectional view of an electrode plate where a mixture is coated on a substrate using a conventional coating apparatus.
FIG. 4B is a cross-sectional view of an electrode plate coated with a mixture on a substrate using a coating apparatus according to embodiments of the present disclosure.
FIG. 5A is a cross-sectional view of a mixture region of an electrode plate formed by a coating apparatus according to embodiments of the present disclosure.
FIG. 5B is a cross-sectional view of a mixture region of an electrode plate formed by a coating apparatus according to embodiments of the present disclosure.
FIG. 5C is a cross-sectional view of a mixture region of an electrode plate formed by a coating apparatus according to embodiments of the present disclosure.
FIG. 6A is a perspective view of a coating apparatus according to embodiments of the present disclosure.
FIG. 6B is a perspective view of a coating apparatus according to embodiments of the present disclosure.
FIG. 7 is a cross-sectional view of a part of a coating apparatus according to embodiments of the present disclosure.
FIG. 8 is a flowchart showing a coating method according to embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The embodiments described herein can be explained with reference to cross-sectional views and/or plain views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof. Like reference numerals refer to like elements throughout the specification.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

As used herein, the term "machine direction" or "MD direction" may refer to a direction in which an electrode plate is conveyed during a manufacturing process of the electrode plate by means of a transport equipment such as conveyor rollers. In an embodiment, the MD direction may be used interchangeably with the full-length direction of the electrode plate, but is not limited thereto.

As used herein, the term "transverse direction" or "TD direction" may refer to a direction horizontally perpendicular to the MD direction on a plane of the electrode plate. In an embodiment, the TD direction may be used interchangeably with the full-width direction of the electrode plate, but is not limited thereto.

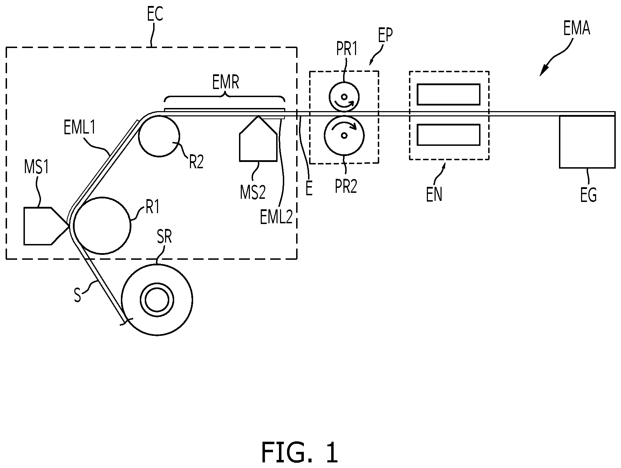

FIG. 1 is a schematic view of an electrode plate manufacturing apparatus that includes a coating apparatus according to embodiments of the present disclosure.

The electrode plate manufacturing apparatus EMA may include a supply roll SR for supplying a substrate S, a coating section EC, a pressing section EP, a notching section EN, and a collecting section EG.

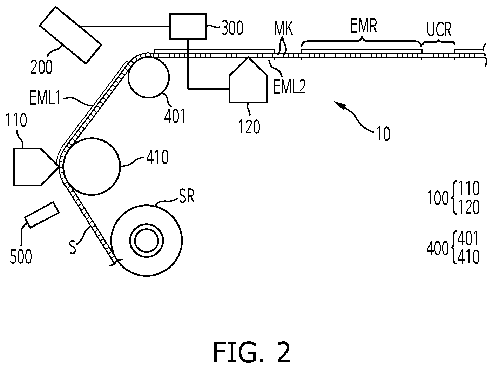

The substrate S may be supplied by the supply roll SR. The substrate S may include a first surface and a second surface, which are opposite sides to each other. A line perpendicular to the first and second surfaces may also be perpendicular to the MD Direction of the substrate. Mixtures (slurries) supplied from tips of material supply units MS1 and MS2 in the coating section EC may be coated onto the first surface and/or the second surface as mixture layers EML1 and EML2 to form a mixture region EMR of the electrode plate E. The material supply units MS1 and MS2 may be arranged close to rollers R1 and R2, respectively. To ensure that the mixture region EMR of the electrode plate E is formed in a flat and flush manner, the rollers R1 and R2 may be arranged to apply tension in the MD direction of the electrode plate E, parallel to each other but in opposite directions. As the substrate S passes through the coating section EC, the electrode plate E with the mixture region EMR may be formed. The mixture layers EML1 and EML2 included in the electrode plate E is omitted after passing through the coating section EC. A coating apparatus (see Fig. 2) may be arranged in the coating section EC of the electrode plate manufacturing apparatus.

The pressing section EP may pass the electrode plate E between two pressing rollers PR1 and PR2 to roll the mixture layers EML1 and EML2 coated on the substrate of the electrode plate E. This process may allow uniform thicknesses of the mixture layers EML1 and EML2 and the electrode plate E and may smooth the surface of the electrode plate E.

After passing through the pressing section EP, the electrode plate E may proceed to the notching section EN. In an embodiment, in the notching section EN, uncoated regions of the electrode plate E where the mixture layers EML1 and EML2 are not coated onto the electrode plate E may be cut or punched to form tab portions.

The collecting section EG may store or accommodate the electrode plate E notched while passing through the notching section EN. The collecting section EG may include elements, such as a winding roll or a magazine, depending on the type of secondary battery.

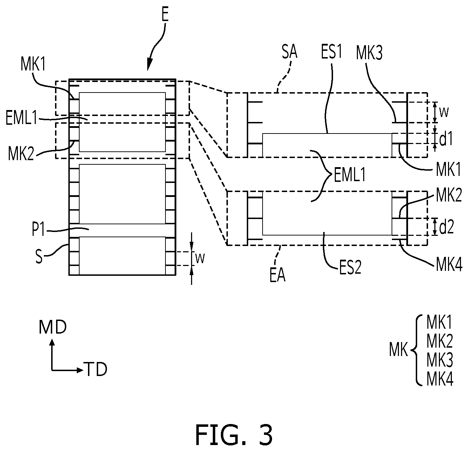

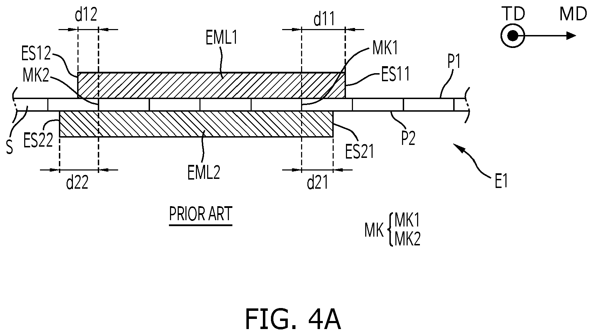

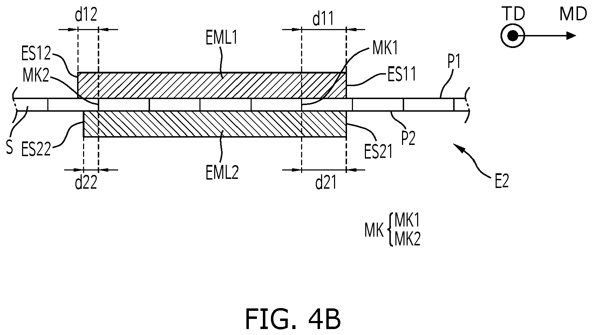

FIG. 2 is a schematic view of a coating apparatus 10 according to embodiments of the present disclosure. FIG. 3 is a schematic view of a coating apparatus 10 according to embodiments of the present disclosure, in which a first sensor 200 measures a positional relationship between a first mixture layer EML1 on a first surface P1 and first MK1 and second MK2 markers. FIG. 4A is a cross-sectional view of an electrode plate where a mixture is coated on a substrate using a conventional coating apparatus. FIG. 4B is a cross-sectional view of an electrode plate E coated with a mixture on a substrate S using a coating apparatus 10 according to embodiments of the present disclosure.

Referring to FIGS. 2 to 4B, a coating apparatus 10 may include a first material supply unit 110 to coat a first mixture layer EML1 on a first surface P1 of a substrate S, on which markers MK are repeatedly formed along the MD direction. The coating apparatus 10 may further include a first sensor 200 to sense the first mixture layer EML1 and the markers MK, and a processor 300 to calculate a position of the first mixture layer EML1 based on the markers MK. The first sensor 200 may sense the position of the markers MK and a distance between each marker MK and the first mixture layer EML1. The first mixture layer EML1 may include a first edge ES1 and a second edge ES2, both horizontally perpendicular to the MD direction, and the processor 300 may measure a first distance d1 between the first edge ES1 and a first marker MK1 adjacent to the first edge ES1. The coating apparatus 10 may further include a second material supply unit 120 to coat a second mixture layer EML2 on a second surface P2 of the substrate S. Based on the first distance d1, the processor 300 may control the second material supply unit 120 to adjust a distance between the second mixture layer EML2 and the first marker MK1. The first surface P1 and the second surface P2 may be surfaces of the substrate S opposite to each other. Advantageously, this configuration may reduce a thickness difference caused by the first mixture layer EML1 and the second mixture layer EML2 on the electrode plate E, or may minimize the overall thickness fluctuation of the electrode plate E.

In the coating apparatus 10, the substrate S may be supplied from a supply roll SR. The substrate S may move in one direction, where the direction of movement may correspond to the MD direction. The movement direction of the substrate S may change as the substrate S comes into contact with rollers 401 and 410 and the like. As the mixture layer EML1 or EML2 is coated on at least one surface of the substrate S by the coating apparatus 10, the electrode plate E may be formed. In the electrode plate E, the regions where the mixture layers EML1 and EML2 are not coated may correspond to an uncoated region UCR, while the regions where the mixture layers EML1 and EML2 are coated may correspond to the mixture region EMR. Each of the mixture layers EML1 and EML2 may include an active material, a conductive agent, a binder, and the like. The electrode plate E may include either a positive electrode plate or a negative electrode plate, depending on the type of active materials included in the mixture region EMR on the substrate S. In an embodiment, the mixture region EMR includes positive active materials, and the electrode plate E may include the positive electrode plate. In an embodiment, the mixture region EMR includes negative active materials, and the electrode plate E may include the negative electrode plate.

In an embodiment, the electrode plate E is the positive electrode plate, the substrate S may include aluminum foil or the like, and the mixture region EMR may include a transition metal oxide or the like as the positive active material. In an embodiment, the electrode plate E is the negative electrode plate, the substrate S may include copper (Cu) or nickel (Ni) foil, and the mixture region EMR may include graphite or the like as the negative active material. However, the present disclosure is not limited to these examples, and the substrate S or the mixture region EMR may include other materials suitable for their respective electrodes.

In an embodiment, the substrate S may include the first surface P1 and the second surface P2 on which the mixture layers EML1 and EML2 may be respectively coated. The first surface P1 and the second surface P2 may be surfaces opposite to each other. In an embodiment, a line perpendicular to the first surface P1 may be perpendicular to both the MD direction and the TD direction, and a line perpendicular to the second surface P2 may also be perpendicular to both the MD direction and the TD direction.

In an embodiment, the substrate S may include a plurality of markers MK that are repetitively formed. The plurality of markers MK may be arranged on at least one of the first surface P1 or the second surface P2 of the substrate S. The plurality of markers MK may be arranged on both the first surface P1 and the second surface P2 of the substrate S, and one marker MK among the plurality of markers MK on the first surface P1 may correspond to one marker MK among the plurality of markers MK on the second surface P2. In an embodiment, the positions of the two corresponding markers MK along the MD direction of the substrate S may be the same. In an embodiment, a line connecting the two corresponding markers MK may be perpendicular to either the first surface P1 or the second surface P2. The plurality of markers MK on the first surface P1 may be spaced apart at predetermined intervals w along the MD direction. The predetermined intervals w between the markers MK may range from about 1 mm to about 20 mm. However, the present disclosure is not limited thereto, and the predetermined intervals w between the markers MK may be selected and determined in consideration of a length of the mixture region EMR in the MD direction. Each marker MK may be in a shape of line that is parallel to the TD direction. However, the present disclosure is not limited thereto, and each marker MK may have other shapes such as circles or polygons.

The coating apparatus 10 may include a material supply unit 100 to coat a mixture onto the substrate S. The material supply unit 100 may include the first material supply unit 110 and the second material supply unit 120. The first material supply unit 110 may coat a mixture onto the first surface P1 of the substrate S to form the first mixture layer EML1. The second material supply unit 120 may coat a mixture onto the second surface P2 of the substrate S to form the second coating layer EML2.

In an embodiment, the first mixture layer EML1 may be formed on the first surface P1 of the substrate S first, then the second mixture layer EML2 may be formed on the second surface P2 of the substrate S. The formation position of the second mixture layer EML2 on the second surface P2 may be selected and determined based on the formation position of the first mixture layer EML1 formed on the first surface P1. In an embodiment, the substrate S coated with the first mixture layer EML1 is moving in one direction, and a timing of opening and closing of the second material supply unit 120 may be determined based on the position of the first mixture layer EML1 on the first surface P1.

The coating apparatus 10 may include the first sensor 200 to sense the first mixture layer and the markers. In an embodiment, the first sensor 200 may sense the positions of the markers MK and the distances between each of the markers MK and the first mixture layer EML1. The first sensor 200 may sense areas SA and EA that respectively include the two end edges ES1 and ES2 horizontally perpendicular to the MD direction of the first mixture layer EML1 on the first surface P1 of the substrate S. In an embodiment, the first sensor 200 may sense a start area SA near a starting point of the first mixture layer EML1 in the MD direction. The sensed start area SA may include information about a position of the first edge ES1 of the first mixture layer EML1 and a position of at least one marker adjacent to the first edge ES1. The sensed start area SA may include information about a distance between the first edge ES1 and at least one marker adjacent to the first edge ES1. One of a first marker MK1 and a third marker MK3 may be selected as the marker MK adjacent to the first edge ES1. In an embodiment, the first sensor 200 may sense a distance d1 between the first edge ES1 and the first marker MK1 where an extended line of the first marker MK1 contacts the first mixture layer EML1.

In an embodiment, the first sensor 200 may sense an end area EA near an end point of the first mixture layer EML1 in the MD direction. The sensed end area EA may include information about a position of the second edge ES2 of the first mixture layer EML1 and a position of at least one marker adjacent to the second edge ES2. The sensed end area EA may include information about a distance between the second edge ES2 and at least one marker adjacent to the second edge ES2. One of a second marker MK2 and a fourth marker MK4 may be selected as the marker MK adjacent to the second edge ES2. In an embodiment, the first sensor 200 may sense a distance d2 between the second edge ES2 and the second marker MK2 where an extended line of the second marker MK2 contacts the first coating layer EML1.

In an embodiment, the first sensor 200 may sense the number of markers MK where extended lines of the markers MK contact the first mixture layer EML1.

In an embodiment, the first sensor 200 may include a CCD camera. However, the present disclosure is not limited thereto, and the first sensor 200 may include other devices capable of sensing at least one of the positions of the first mixture layer EML1 and the marker MK, or the distance between the first mixture layer EML1 and the marker MK.

The coating apparatus 10 may include the processor 300. The processor 300 may calculate a position of the first mixture layer EML1 based on the marker MK. The processor 300 may be connected to the first sensor 200 and receive information sensed by the first sensor 200. The processor 300 may measure a distance between the first mixture layer EML1 and the marker MK based on the information received from the first sensor 200. The result can be used by the processor 300 to adjust a distance between the second mixture layer EML2 and the marker MK. The formation position of the second mixture layer EML2 may be adjusted using the marker MK as a reference point. In an embodiment, the processor 300 may control the opening and closing of the second material supply unit 120 to adjust a distance between the second mixture layer EML2 formed by the second material supply unit 120 and the first marker MK1. In an embodiment, the processor 300 may control an opening time of the second material supply unit 120 to adjust a length of the second mixture layer EML2 and also adjust a distance between the second mixture layer EML2 and the second marker MK2. In an embodiment, the processor 300 may move the second material supply unit 120 in the MD direction to adjust the distance between the second mixture layer EML2 formed by the second material supply unit 120 and the first marker MK1.

In an embodiment, the processor 300 may measure the first distance d1 between the first edge ES1 of the first mixture layer EML1 and the first marker MK1 adjacent to the first edge ES1. In an embodiment, the processor 300 may measure the second distance d2 between the second edge ES2 of the first mixture layer EML1 and the second marker MK2 adjacent to the second edge ES2. In an embodiment, the processor 300 may calculate a length of the first mixture layer EML1 in the MD direction using the first distance d1 and the second distance d2. In an embodiment, the processor 300 may calculate an inner length by multiplying the number of markers MK where extended lines of the marker MK contact the first mixture layer EML1, which is obtained from the first sensor 200, and each of the predetermined intervals w between two adjacent markers of the markers MK. The inner length is then added to the first distance d1 and the second distance d2 to calculate the length of the first mixture layer EML1 in the MD direction. In an embodiment, instead of measuring the first distance d1 and the second distance d2, the first sensor 200 may sense a third distance between the third marker MK3 and the first edge ES1 and a fourth distance between the fourth marker MK4 and the second edge ES2. In an embodiment, the length of the first mixture layer EML1 in the MD direction may be calculated by summing a length of twice the predetermined interval w between two of the markers MK and the inner length, then subtracting the first distance d1 and the second distance d2 from the summed value.

In an embodiment, the processor 300 may calculate the length of the first mixture layer EML1 in the MD direction using a reference length of the first mixture layer EML1 in the MD direction input into the processor 300. In an embodiment, the predetermined interval w between every two of the markers MK is about 5 mm and the reference length of the first mixture layer EML1 in the MD direction input into the processor 300 is about 20 mm. In a case where the first distance d1 and the second distance d2 measured by the first sensor 200 are about 2.3 mm and about 2.9 mm, respectively, the sum of the first distance d1 and the second distance d2 is about 5.2 mm. Among summed values obtained by adding about 5.2 mm to the products of the predetermined interval w between two of the markers MK and arbitrary natural numbers, the processor 300 may select the summed value closest to the reference length in the MD direction and determine the selected summed value as the length of the first mixture layer EML1 in the MD direction. In an embodiment, the actual length of the first mixture layer EL1 in the MD direction may be calculated as about 20.2 mm. However, the present disclosure is not limited thereto, and the processor 300 may calculate the length of the first mixture layer EML1 in the MD direction using various other methods.

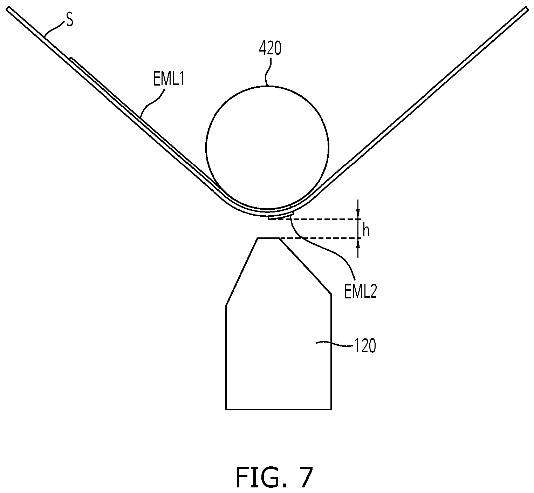

The coating apparatus 10 may further include a roller unit 400. The roller unit 400 may make contact with the substrate S to apply tension to the substrate S. The direction of the tension applied to the substrate S may be in two opposite directions parallel to the MD direction. The roller unit 400 may contact the substrate S to ensure that the substrate S is flattened. As the substrate S progresses, the roller unit 400 may rotate accordingly. Additionally, the roller unit 400 may change a travel direction of the substrate S. The roller unit 400 may include a plurality of rollers 401 and 410. The first roller 410 may be arranged in proximity to the first material supply unit 110, and the substrate S may be disposed between the first roller 410 and the first material supply unit 110. The first roller 410 may be placed on the second surface P2, and the substrate S may be stretched flatter under tension acting in two opposite directions parallel to the MD direction. As a result, the first mixture layer EML1 coated by the first material supply unit 110 may be coated uniformly throughout the entire area where the first mixture layer EML1 is applied. Similarly, the substrate S may be arranged between a second roller 420 (see FIG. 7) and the second material supply unit 120. The second roller 420 may be placed on the first surface P1, and the substrate S may be stretched flatter under tension acting in two opposite directions parallel to the MD direction. As a result, the second mixture layer EML2 coated by the second material supply unit 120 may be coated uniformly throughout the entire area where the second mixture layer EML2 is applied.

The coating apparatus 10 may further include a marking unit 500 provided to form the plurality of markers MK. The marking unit 500 may form a first marker MK1 and a second marker MK2 included in the plurality of markers MK to be spaced apart from each other along the MD direction. The plurality of markers MK formed by the marking unit 500 may be arranged at regular intervals, but the present disclosure is not limited thereto. In an embodiment, the marking unit 500 may include a laser or other similar equipment, in which case the plurality of markers may be laser markings. However, the present disclosure is not limited thereto, and the plurality of markers MK formed by the marking unit 500 may be formed by another device or equipment.

Referring to FIG. 4A, in a conventional case, a distance d11 between a first marker MK1 and a first edge ES11 of a first mixture layer EML1 coated on a first surface P1 of an exemplary electrode plate E1 may be different from a distance d21 between the first marker MK1 and a first edge ES21 of a second mixture layer EML2 coated on a second surface P2 of the exemplary electrode plate E1. The difference between the two distances d11 and d12 may be caused by process errors. Additionally, a distance d12 between a second marker MK2 and a first edge ES12 of the first mixture layer EML1 coated on the first surface P1 of the exemplary electrode plate E1 may be also different from a distance d22 between the second marker MK2 and a second edge ES22 of a second mixture layer EML2 coated on a second surface P2 of the exemplary electrode plate E1. The difference between the two distances d21 and d22 may be caused by process errors. When the electrode plate E1 is wound, between the two distances d21 and d22, the distance d22 between the second edge ES22 and the second marker MK2 may be less than the distance d21. Nonetheless, the difference between the two distances d21 and d22 may be less or greater than the intended difference due to process errors. As a result of the process errors, the exemplary electrode plate E1 manufactured in a conventional coating apparatus may include a number of regions in the electrode plate E1 having variations in thickness. This may lead to a reduction in the yield of the manufactured electrode plate E1, a decrease in the quality of the electrode plate E1, and an increased likelihood of defects in the secondary battery that includes the electrode plate E1.

On the other hand, referring to FIG. 4B, embodiments of the present disclosure provide a coating apparatus 10 having a distance d11 between a first marker MK1 and a first edge ES11 of a first mixture layer EML1 coated on a first surface P1 of an electrode plate E2 being substantially the same as a distance d21 between the first marker MK1 and a first edge ES21 of a second mixture layer EML2 coated on a second surface P2 of the electrode plate E2. In an embodiment, the coordinates of a starting point of the first mixture layer EML1 and a starting point of the second mixture layer EML2 may be substantially the same in the MD direction. Such an alignment may be obtained because, based on the information regarding the first mixture layer EML1 and the first marker MK1 that are sensed by the first sensor 200 in the coating apparatus 10, the processor 300 may control the second material supply unit 120 to adjust the coating of the second mixture layer EML2. Similarly, a distance d12 between a second marker MK2 and a second edge ES12 of the first mixture layer EML1 coated on the first surface P1 of the electrode plate E2 may be substantially the same as or different from a distance d22 between the second marker MK2 and a second edge ES22 of the second mixture layer EML2 coated on the second surface P2 of the electrode plate E2. In an embodiment, the electrode plate E2 is stacked to form a stacked electrode assembly, and the two distances d12 and d22 may be substantially the same. In an embodiment, the electrode plate E2 is wound to form a wound electrode assembly, the two distances d12 and d22 may be different from each other, and the difference between the two distances d12 and d22 may be appropriately selected based on the position of the mixture region EMR within the wound electrode assembly.

In the coating apparatus 10, the positions of the marker MK and the first mixture layer EML1 formed on the first surface P1 of the substrate S, as well as the distance therebetween, may be sensed, allowing the second mixture layer EML2 to be placed on the second surface P2 of the substrate S at a desired position. The electrode plate E2 manufactured using the coating apparatus 10 may have fewer regions having variance in thickness than the electrode plate E1 manufactured using the conventional coating apparatus. In an embodiment, the coating apparatus 10 can reduce the formation of regions having variance in thickness on the electrode plate E2. In an embodiment, the coating apparatus 10 may control the location of the regions having variance in thickness on the electrode plate E2. Advantageously, such an arrangement can enhance the quality of the electrode plate E2, increase the manufacturing yield of the electrode plate E2, and improve the performance of the secondary battery containing the electrode plate E2 and/or reduce the likelihood of defects.

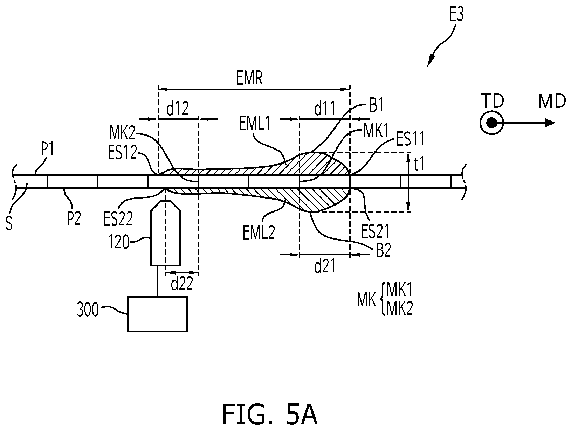

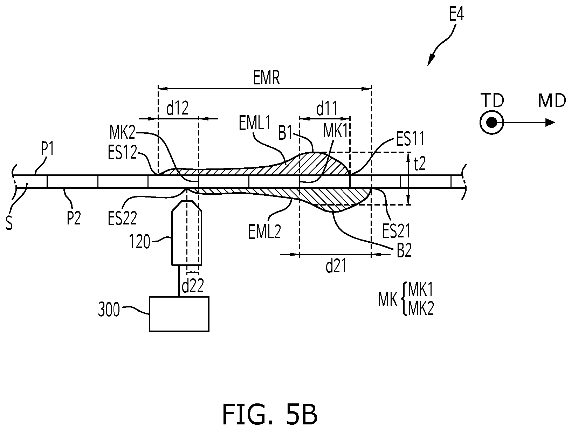

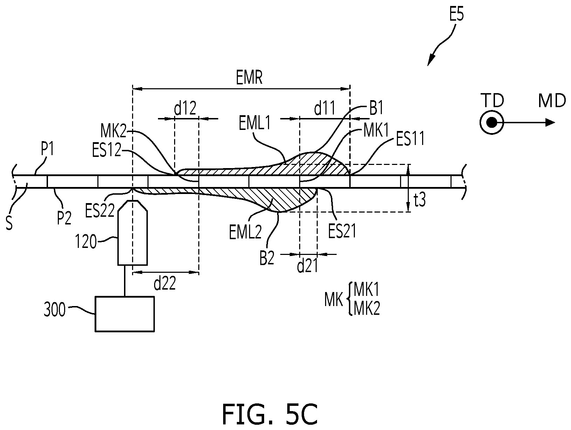

FIG. 5A is a cross-sectional view of a mixture region of an electrode plate formed by a coating apparatus according to embodiments of the present disclosure. FIG. 5B is a cross-sectional view of a mixture region of an electrode plate formed by a coating apparatus according to embodiments of the present disclosure. FIG. 5C is a cross-sectional view of a mixture region of an electrode plate formed by a coating apparatus according to embodiments of the present disclosure.

Referring to FIGS. 5A to 5C, a mixture region EMR of an electrode plate E3 formed by a coating device may vary in thickness along the MD direction. When the mixtures are supplied from the material supply units to form mixture layers EML1 and EML2, the mixtures may spread unevenly on the substrate S along the MD direction, and each of the mixture layers EML1 and EML2 may have a non-uniform thickness. Such an uneven thickness along the MD direction may be caused by characteristics of the material supply unit 100 or the properties of the mixture itself.

Referring to FIG. 5A, in the electrode plate E3, a distance d11 between a first marker MK1 and a first edge ES11 of the first mixture layer EML1 may be substantially equal to a distance d21 between the first marker MK1 and a first edge ES21 of the second mixture layer EML2. A position of a bulge portion B1 of the first mixture layer EML1 and a position of a bulge portion B2 of the second mixture layer EML2 may overlap with each other based on coordinates in the MD direction. The bulge portions B1 and B2 refer to portions of the mixture layers EML1 and EML2 with the greatest thickness. Consequently, the maximum thickness t1 of the mixture region EMR of the electrode plate E3 may be increased.

Referring to FIGS. 5B and 5C, the processor 300 may adjust the positioning of the second mixture layer EML2 such that the positions of the bulge portions B1 and B2 of the first mixture layer EML1 and the second mixture layer EML2 based on the coordinates in the MD Direction do not overlap with each other and are instead spaced apart. In an embodiment, the processor 300 may adjust the opening and closing timing of the second material supply unit 120 to control a distance between the second mixture layer EML2 and the first marker MK1. In an embodiment, the processor 300 may control the positioning of the second mixture layer EML2 such that the thickness of the mixture region EMR does not exceed a predetermined thickness, and may adjust the distance between the second mixture layer EML2 and the first marker MK1. The predetermined thickness may be one of several thickness values inputted or stored in the processor 300. Accordingly, the distance d21 between the first edge ES21 of the second mixture layer EML2 and the first marker MK1 may be different from the distance d11 between the first edge ES11 of the first mixture layer EML1 and the first marker MK1. The difference between the two distances d11 and d21 may be appropriately selected by the processor 300 to reduce the thickness variation in the mixture region EMR.

Referring to FIG. 5B, the processor 300 may expedite the opening timing of the second material supply unit 120 such that a distance d21 between a first marker MK1 and a first edge ES21 of a second mixture layer EML2 on a second surface P2 of an electrode plate E4 is greater than a distance d11 between the first marker MK1 and a first edge ES11 of a first mixture layer EML1 of the electrode plate E4. In this configuration, bulge portions B1 and B2 of the first mixture layer EML1 and the second mixture layer EML2 may be spaced apart without overlapping each other based on the coordinates in the MD Direction. Additionally, the maximum thickness t2 of a mixture region EMR in the electrode plate E4 may be reduced compared to the case where the two bulge portions B1 and B2 overlap based on the coordinates in the MD direction.

Referring to FIG. 5C, the processor 300 may delay the opening timing of the second material supply unit 120 such that a distance d21 between a first marker MK1 and a first edge ES21 of a second mixture layer EML2 on a second surface P2 of an electrode plate E5 is less than a distance d11 between the first marker MK1 and a first edge ES11 of a first mixture layer EML1 of the electrode plate E5. In this configuration, bulge portions B1 and B2 of the first mixture layer EML1 and the second mixture layer EML2 may be spaced apart without overlapping each other based on the coordinates in the MD Direction. Additionally, the maximum thickness t3 of a mixture region EMR in the electrode plate E5 may be reduced compared to the case where the two bulge portions B1 and B2 overlap base on the coordinates in the MD direction. A distance d12 between a second marker MK2 and a second edge ES12 of the first mixture layer EML1 is less than a distance d22 between the second marker MK2 and a second edge ES22 of the second mixture layer EML2. However, the present disclosure is not limited thereto, and the processor 300 may appropriately select a length of the second mixture layer EML2 in the MD direction using a length of the first mixture layer EML1 in the MD direction calculated by the processor 300.

In the coating apparatus 10, the positions of the marker MK and the first mixture layer EML1 formed on the first surface P1 of the substrate S, as well as the distance therebetween, may be sensed, then the second mixture layer EML2 may be placed such that the bulge portion B1 of the first mixture layer EML1 and the bulge portion B2 of the second mixture layer EML2 do not overlap with each other and are spaced apart. Because the bulge portions B1 and B2 of the first and second mixture layers EML1 and EML2 are spaced apart from each other in the MD Direction such that they do not overlap with each other, the maximum thickness and thickness variations of the electrode plate E can be reduced. Consequently, such an arrangement can enhance the quality of the electrode plate E, increase the manufacturing yield of the electrode plate E, and improve the performance of the secondary battery containing the electrode plate E and/or reduce the likelihood of defects.

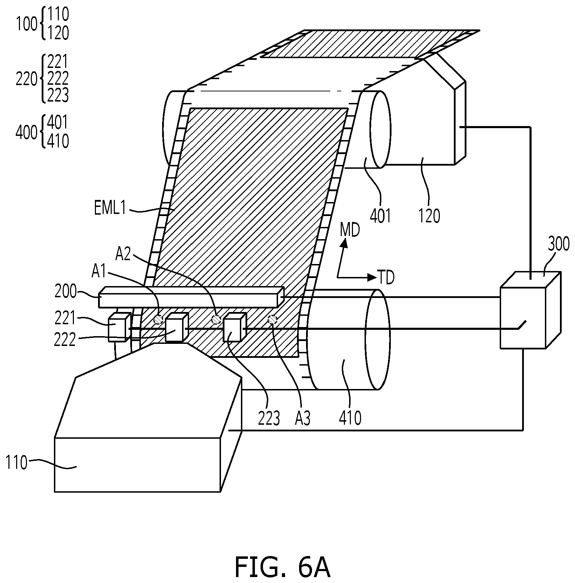

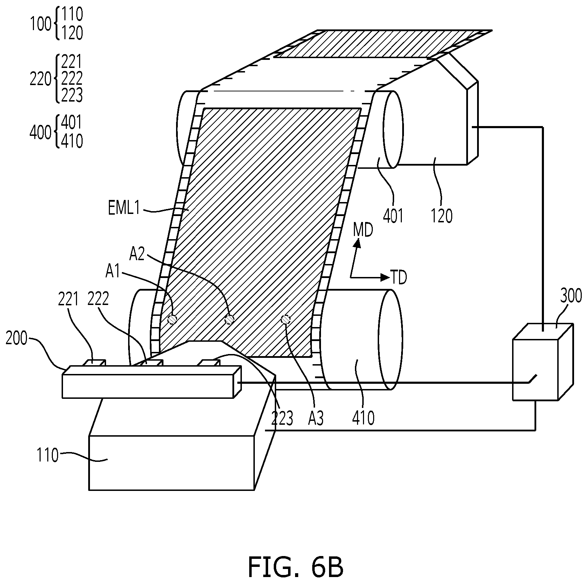

FIG. 6A is a perspective view of a coating apparatus according to embodiments of the present disclosure. FIG. 6B is a perspective view of a coating apparatus according to embodiments of the present disclosure. FIG. 7 is a cross-sectional view of a part of a coating apparatus according to embodiments of the present disclosure.

Referring to FIGS. 6A and 6B, the coating apparatus 10 may further include a second sensor 220 that is arranged parallel to the TD direction and measures the thickness of the first mixture layer EML1 or the second mixture layer EML2. Referring to FIG. 6A, the second sensor 220 may be a separate component from the first sensor 200, and may be electrically connected to the processor 300. Referring to FIG. 6B, the second sensor 220 may be a component integrated with the first sensor 200, and may be electrically connected to the first sensor 200. In an embodiment, the second sensor 220 is configured to measure the thickness of the second mixture layer EML2, and the second sensor 220 may be a separate component from the first sensor 200. The second sensor 220 may include a first sensing unit 221 and a second sensing unit 222. The first sensing unit 221 may measure a thickness of a region of the first mixture layer EML1 close to the outside in the TD direction of the first mixture layer EML1. In an embodiment, the first sensing unit 221 may measure a thickness of a first region A1 located on the left hand side of the first mixture layer EML1 in the TD direction. The second sensing unit 222 may measure a thickness of a second region A2 located at the center of the first mixture layer EML1 in the TD direction. In an embodiment, the second sensor 220 may further include a third sensing unit 223, and the third sensing unit 223 may measure a thickness of a third region A3 located on the right hand side of the first mixture layer EML1 in the TD direction. The positions of the first to third regions A1, A2 and A3 may be appropriately selected in consideration of positions for calculating the thickness deviation of the first mixture layer EML1 in the TD direction.

The processor 300 of the coating apparatus 10 may calculate the thickness difference of the first mixture layer EML1 in the TD direction using at least two of the first region A1, the second region A2, or the third region A3. In an embodiment, the processor 300 may calculate the thickness deviation of the first mixture layer EML1 in the TD direction by using the thickness difference between the second region A2 and the first region A1, or the thickness difference between the third region A3 and the first region A1. However, the present disclosure is not limited thereto, and the thickness difference of the first mixture layer EML1 in the TD direction may be calculated by various methods. For more precise measurement, the second sensor 220 may include four or more sensing units.

The processor 300 of the coating apparatus 10 may reduce a gap between the first material supply unit 110 and the first roller 410 in response to a case where the thickness difference of the first mixture layer EML1 in the TD direction exceeds a predetermined thickness range, or increase the gap between the first material supply unit 110 and the first roller 410 in response to a case where the thickness difference of the first mixture layer EML1 in the TD direction is below a predetermined thickness range. In an embodiment, in response to the thickness difference between the second region A2 and the first region A1 being greater than a predetermined thickness, the gap between the first material supply unit 110 and the first roller 410 may be reduced. The gap between the first material supply unit 110 and the first roller 410 may be adjusted by moving the first material supply unit 110 in the direction toward the first roller 410. In an embodiment, the gap between the first material supply unit 110 and the first roller 410 may be adjusted to be between about 0.05 mm and about 0.3 mm, but is not limited thereto.

In an embodiment, the adjustment of the gap between the first material supply unit 110 and the first roller 410 may be performed in real-time. When the first material supply unit 110 is opened and the first mixture layer EML1 begins to form, the thicknesses of the first to third regions A1, A2, and A3, all of which are parallel to the TD direction of the first mixture layer EML1, may be respectively obtained using the first to third sensing units 221, 222, and 223. The processor 300 may calculate the thickness deviation of the first mixture layer EML1 in the TD direction using the thicknesses of the first to third regions A1, A2, and A3. Using the thickness deviation, the processor may determine in real-time whether to move the first material supply unit 110 and control its movement, thereby reducing the thickness difference in the TD direction in the first mixture layer EML1. In an embodiment, the adjustment of the gap between the first material supply unit 110 and the first roller 410 may be performed by reflecting the measurements of the previously placed mixture layer EML1 when forming the currently placed mixture layer EML1. However, the present disclosure is not limited thereto, and the gap between the first material supply unit 110 and the first roller 410 can be adjusted in various ways.

In an embodiment, the gap between the first material supply unit 110 and the first roller 410 decreases, and the mixture may spread more evenly in the TD direction. In an embodiment, the thickness deviation of the first mixture layer EML1 in the TD direction may be reduced. As a result, the quality of the electrode E can be enhanced, the manufacturing yield of the electrode E can be increased, and the performance of the secondary battery containing the electrode E can be enhanced, and/or the likelihood of defects may be reduced.

The thickness measurement of the first mixture layer EML1 in the TD direction by the second sensor 220, the calculation of the thickness deviation in the TD direction by the processor 300, and the adjustment of the gap between the first material supply unit 110 and the first roller 410 may also be applied to the second mixture layer EML2, the second material supply unit 120, and the second roller 420. Referring to FIG. 7, the substrate S coated with the first mixture layer EML1 may pass between the second roller 420 and the second material supply unit 120, and the second material supply unit 120 may coat the second mixture layer EML2 onto the substrate S. The second sensor 220 may sense the thicknesses of a plurality of regions of the second mixture layer EML2 in the TD direction, and the processor 300 may calculate the thickness deviation using the information received from the second sensor 220. Using this information, the processor 300 may adjust a gap h between the second material supply unit 120 and the second roller 420.

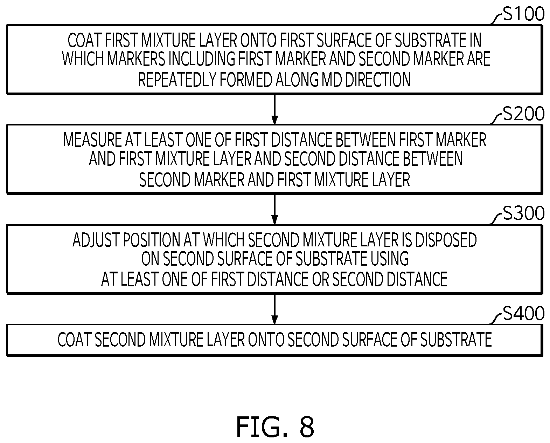

FIG. 8 is a flowchart showing a coating method according to embodiments of the present disclosure.

The coating method includes steps of coating a first mixture layer by a first material supply unit onto a first surface of a substrate in which markers including a first marker and a second marker are repeatedly formed along an MD direction (step S100), measuring, by a first sensor, at least one of a first distance between the first marker and the first mixture layer and a second distance between the second marker and the first mixture layer (step S200), adjusting a position at which a second mixture layer is disposed on a second surface of the substrate by controlling a second material supply unit by a processor, using at least one of the first distance or the second distance (step S300), and coating the second mixture layer by the second material supply unit onto the second surface of the substrate (step S400). The first surface and the second surface may refer to surfaces of the substrate positioned in opposite directions. In the coating method, a position of the first mixture layer and positions of the markers, and/or a distance between the first mixture layer and the first marker may be measured to adjust the position of the second mixture layer when coating the second mixture layer. The markers may be used as reference points for positioning the second mixture layer. In an embodiment, the position of the first mixture layer and the positions of the markers, and/or a distance between the first mixture layer and the second marker may be measured to adjust the position of the second mixture layer and a length of the second mixture layer in the MD direction when coating the second mixture layer. The coating method can reduce variance in thickness (the occurrence of step differences) in the electrode plate caused by the positioning of the first and second mixture layers, or may control the thickness of the electrode plate not to exceed a predetermined thickness.

The coating method may include the step S100 of coating the first mixture layer by the first material supply unit onto the first surface of the substrate in which the markers including the first marker and the second marker are repeatedly formed along the MD direction. The substrate may include the plurality of markers that are repeatedly formed. The plurality of markers may be in shapes of lines parallel to a TD direction. The first marker, formed on the first surface of the substrate, may be visible from the second surface, or a marker corresponding to the first marker may be formed on the second surface. The mixture supplied from the first material supply unit may be coated onto the first surface of the substrate, forming the first mixture layer. The first mixture layer may be positioned at the first distance from the first marker, and the second mixture layer may be positioned at the second distance from the second marker. Here, the first distance may refer to a distance in the MD direction between the first mixture layer and the first marker. Additionally, the first distance may be the shortest distance in the MD direction between the first mixture layer and the first marker.

The coating method may further include a step of forming the markers on the substrate prior to the step S100 of coating the first mixture layer. The markers may be formed at predetermined intervals. The predetermined intervals between the markers may range from about 1 mm to about 20 mm, but are not limited thereto.

The coating method according to the exemplary embodiment may include the step S200 of measuring, by the first sensor, at least one of the first distance between the first marker and the first mixture layer and the second distance between the second marker and the first mixture layer. The first sensor may sense at least one of the first marker and the second marker, as well as the first mixture layer. In an embodiment, the first sensor may sense the positions of the first marker, the second marker, and the first mixture layer. Additionally, using the information sensed by the first sensor, the processor may measure the first distance between the first marker and the first mixture layer, and the second distance between the second marker and the first mixture layer. The first sensor may be electrically connected to the processor and transmit the sensed or measured information to the processor.

The coating method may include a step in which the processor calculates a length of the first mixture layer in the MD direction based on at least one of the first distance or the second distance measured in the step S200. The processor may calculate the length of the first mixture layer in the MD direction using both the first distance and the second distance. The method for calculating the length of the first mixture layer in the MD direction by the processor has been previously described, so further explanation will be omitted here.

The coating method may include the step S300 of controlling the second material supply unit by a processor to adjust the position of the second mixture layer on the second surface of the substrate, using at least one of the first distance or the second distance. The mixture supplied from the second material supply unit may be coated on the second surface of the substrate, forming the second mixture layer. Based on the information received from the first sensor, the processor may control the second material supply unit to adjust the formation of the second mixture layer. In an embodiment, the processor may control the timing of the opening and closing of the second material supply unit to adjust the formation of the second mixture layer. In an embodiment, the processor may move the second material supply unit to adjust the formation of the second mixture layer. By controlling the second material supply unit, the processor may adjust the positioning of the second mixture layer.

In an embodiment, the processor may adjust the position at which the second mixture layer is placed using the position of the first marker and the first distance. In an embodiment, the processor may adjust the positioning of the second mixture layer such that the distance between the second mixture layer and the first marker is substantially the same as the first distance. The number of regions having variance in thickness on the electrode plate, which are caused by the formation of the first and second mixture layers, can be reduced. In an embodiment, the processor may adjust the positioning of the second mixture layer such that the distance between the second mixture layer and the first marker is different from the first distance. In this case, the difference between the distance between the second mixture layer and the first marker and the first distance can be appropriately selected by the processor. In an embodiment, in a case where both the first and second mixture layers have bulged portions, the distance between the second mixture layer and the first marker may be adjusted to ensure that the combined thickness of the first and second mixture layers does not exceed a predetermined thickness. The processor may dispose the second mixture layer by adjusting the distance between the second mixture layer and the first marker in consideration of the thickness deviation in the MD direction of the electrode plate. This enables the electrode plate to be formed with a thickness that is less than or equal to a predetermined thickness.

In the coating method, the positioning of the second mixture layer based on the position of the first mixture layer on the substrate. As a result, the quality of the electrode can be enhanced, the manufacturing yield of the electrode can be increased, and the performance of the secondary battery containing the electrode can be enhanced, and/or the likelihood of defects may be reduced.

In an embodiment, the step S300 of adjusting the position of the second mixture layer may include controlling the second material supply unit by the processor to adjust the distance between the second mixture layer and the second marker using the second distance. Accordingly, the processor may adjust the positioning of the second mixture layer and the length of the second mixture layer in the MD direction. In an embodiment, the processor may adjust the positioning of the second mixture layer such that the distance between the second mixture layer and the second marker is substantially the same as the second distance. The manufactured electrode plate may be used in a stacked electrode assembly. In an embodiment, the processor may adjust the positioning of the second mixture layer such that the distance between the second mixture layer and the second marker is different from the second distance. The difference between the distance between the second mixture layer and the second marker and the second distance may be appropriately selected by the processor. When the manufactured electrode plate is used in a wound electrode assembly, and the distance between the second mixture layer and the second marker may be less than the second distance.

The coating method may include the step S400 of coating the second mixture layer by the second material supply unit onto the second surface of the substrate. In the step S400 of coating the second mixture layer, the processor may control the second material supply unit such that the second mixture layer is coated on the second surface of the substrate.

The coating method may further include, after the step S100 of coating the first mixture layer, a step of adjusting a gap between the first material supply unit, which coats the first mixture layer, and the first surface, by calculating a thickness deviation of the first mixture layer in the TD direction using the processor. The second sensor may be disposed parallel to the TD direction of the first mixture layer and may include a plurality of sensing units. Using the second sensor, a plurality of thicknesses of the first mixture layer in the TD direction may be measured. The processor connected to the second sensor may calculate the thickness deviation of the first mixture layer in the TD direction using the plurality of thicknesses of the first mixture layer in the TD direction and adjust the gap between the first material supply unit, which coats the first mixture layer, and the first surface. In an embodiment, the thickness deviation of the first mixture layer in the TD direction is greater than a predetermined thickness, and the processor may reduce the distance between the first material supply unit and the first surface. As a result, the thickness deviation of the first mixture layer in the TD direction may be reduced. The step of adjusting the gap between the first material supply unit and the first surface may be performed after the step S100 of coating the first mixture layer, but it may also be executed in real-time during the step S100 of coating the first mixture layer.

The coating method may further include, after the step S300 of adjusting the position at which the second mixture layer is disposed, a step of adjusting the distance between the second material supply unit, which coats the second mixture layer, and the second surface by calculating the thickness deviation of the second mixture layer in the TD direction. The second sensor may be disposed parallel to the TD direction of the second mixture layer and may include a plurality of sensing units. Using the second sensor, a plurality of thicknesses of the second mixture layer in the TD direction may be measured. The processor connected to the second sensor may calculate the thickness deviation of the second mixture layer in the TD direction using the plurality of thicknesses of the second mixture layer in the TD direction and adjust the gap between the second material supply unit, which coats the second mixture layer, and the second surface. In an embodiment, the thickness deviation of the second mixture layer in the TD direction is greater than a predetermined thickness, and the processor may reduce the distance between the second material supply unit and the second surface. As a result, the thickness deviation of the second mixture layer in the TD direction may be reduced. The step of adjusting the gap between the second material supply unit and the second surface may be performed after the step S400 of coating the second mixture layer, but it may also be executed in real-time during the step S300 of adjusting the position at which the second mixture layer is disposed.

The coating method may measure the thickness deviation in the TD direction of the first mixture layer or the second mixture layer and reduce the thickness deviation of the first mixture layer or the second mixture layer. As a result, the quality of the electrode can be enhanced, the manufacturing yield of the electrode can be increased, and the performance of the secondary battery containing the electrode can be enhanced, and/or the likelihood of defects may be reduced.

Although the present disclosure has been described with reference to embodiments and drawings illustrating aspects thereof, the present disclosure is not limited thereto. Various modifications and variations can be made by a person skilled in the art to which the present disclosure belongs within the scope of the technical spirit of the present disclosure.

### Explanation of notable reference symbols

| | | | |
|---|---|---|---|
| 10: | coating apparatus | 100: | material supply unit |
| 110: | first material supply unit | 120: | second material supply unit |
| 200: | first sensor | 220: | second sensor |
| 300: | processor | 400: | roller unit |
| 500: | marking unit | | |

## Claims

1. A coating apparatus (10), comprising:
a first material supply unit (110) configured to coat a first mixture layer (EML1) on a first surface (P1) of a substrate (S), the substrate (S) comprising markers (MK) repeatedly formed along a machine direction (MD);
a first sensor (200) configured to sense the first mixture layer (EML1) and the markers (MK); and
a processor (300) configured to determine a position of the first mixture layer (EML1) based on the markers (MK).

2. The coating apparatus (10) as claimed in claim 1, wherein the first sensor (200) is configured to sense positions of the markers (MK) and distances between each of the markers (MK) and the first mixture layer (EML1).

3. The coating apparatus (10) as claimed in any of claims 1 or 2, wherein the markers (MK) comprise a first marker (MK1), wherein the first mixture layer (EML1) comprises a first edge (ES1) and a second edge (ES2) perpendicular to the machine direction (MD), and wherein the processor (300) is configured to determine a first distance (d1) between the first edge (ES1) and the first marker (MK1) adjacent to the first edge (ES1).

4. The coating apparatus (10) as claimed in claim 3, wherein the markers (MK) further comprise a second marker (MK2), and wherein the processor (300) is configured to determine a second distance (d2) between the second edge (ES2) and a second marker (MK2) adjacent to the second edge (ES2).

5. The coating apparatus (10) as claimed in claim 4, wherein the processor (300) is configured to determine a length of the first mixture layer (EML1) in the machine direction (MD) based on the first distance (d1) and the second distance (d2).

6. The coating apparatus (10) as claimed in any of claims 3 to 5, wherein the apparatus (10) further comprises a second material supply unit (120) configured to coat a second mixture layer (EML2) on a second surface (P2) of the substrate (S), wherein the second surface (P2) is opposite to the first surface (P1), and wherein the processor (300) is configured to control the second material supply unit (120) based on the first distance (d1).

7. The coating apparatus (10) as claimed in claim 6, wherein the processor (300) is configured to adjust a third distance between a third edge of the second mixture layer (EML2) perpendicular to the machine direction (MD) and the first marker (MK1) to be the same as the first distance (d1).

8. The coating apparatus (10) as claimed in claim 6, wherein the processor (300) is configured to adjust a third distance between a third edge of the second mixture layer (EML2) perpendicular to the machine direction (MD) and the first marker (MK1) to be different from the first distance (d1).

9. The coating apparatus (10) as claimed in any of claims 6 to 8, wherein the processor (300) is configured to adjust a third distance between a third edge of the second mixture layer (EML2) perpendicular to the machine direction (MD) and the first marker (MK1) such that a combined thickness of the first mixture layer (EML1) and the second mixture layer (EML2) is equal to or less than a predetermined thickness.

10. The coating apparatus (10) as claimed in any of claims 6 to 9, wherein the processor (300) is configured to determine a second distance (d2) between the second edge (ES2) and a second marker (MK2) adjacent to the second edge (ES2), and control the second material supply unit (120) based on the first distance (d1) and the second distance (d2).

11. The coating apparatus (10) as claimed in any of claims 6 to 10, wherein the first material supply unit (110) or the second material supply unit (120) is spaced apart from the substrate (S) by a predetermined distance, and wherein the processor (300) is configured to control the first material supply unit (110) or the second material supply unit (120) to adjust the predetermined distance.

12. The coating apparatus (10) as claimed in any of claims 6 to 11, further comprising a second sensor (220) positioned parallel to a transverse direction (TD) perpendicular to the machine direction (MD) to measure a thickness of the first mixture layer (EML1) or the second mixture layer (EML2).

13. The coating apparatus (10) as claimed in claim 12, wherein the second sensor (220) comprises a first sensing unit (221) and a second sensing unit (222), and wherein the processor (300) is configured to reduce the predetermined distance in response to a difference determined between a thickness measured by the first sensing unit (221) and a thickness measured by the second sensing unit (222) being equal to or greater than a predetermined thickness.

14. The coating apparatus (10) as claimed in any of claims 1 to 13, wherein the coating apparatus 10 further comprises a marking unit 500 that forms the markers (MK), and preferably the first marker (MK1) and the second marker (MK2) spaced apart by a predetermined distance.

15. A coating method, the coating method preferably being performed by a coating apparatus (10) configured according to any of claims 6 to 14, the method comprising:
coating a first mixture layer (EML1) on a first surface (P1) of a substrate (S), the substrate (S) comprising markers (MK) repeatedly formed along a machine direction (MD), the markers (MK) comprising a first marker (MK1) and a second marker (MK2);
determining at least one selected from a first distance (d1) and a second distance (d2), the first distance (d1) being a distance between a first edge (ES1) of the first mixture layer (EML1) and the first marker (MK1) adjacent to the first edge (ES1), the second distance (d2) being a distance between a second edge (ES2) of the first mixture layer (EML1) and the second marker (MK2) adjacent to the second edge (ES2);
adjusting a position of a second mixture layer (EML2) to be positioned on a second surface (P2) of the substrate (S) using at least one selected from the first distance (d1) and the second distance (d2), the second surface (P2) being opposite to the first surface (P1); and
coating the second mixture layer (EML2) on the second surface of the substrate (S).
